# EUROPEAN PATENT SPECIFICATION

(11) **EP 3 354 076 B1**
(45) Date of publication and mention of the grant of the patent: **27.02.2019**
(21) Application number: 16849098.5
(22) Date of filing: 08.06.2016
(51) Int. Cl.: H04W 48/18, H04W 28/08

(54) **TERMINAL AND METHOD FOR INTER RAT ACCESS SELECTION IN A COMMUNICATIONS NETWORK**
ENDGERÄT UND VERFAHREN ZUR AUSWAHL VON INTER-RAT-ZUGRIFF IN EINEM KOMMUNIKATIONSNETZWERK
TERMINAL ET PROCÉDÉ POUR UNE SÉLECTION D'ACCÈS INTER TECHNOLOGIE D'ACCÈS RADIO (RAT) DANS UN RÉSEAU DE COMMUNICATION

(30) Priority: 25.09.2015 US 201562232498 P
(43) Date of publication of application: 01.08.2018
(73) Proprietor: Telefonaktiebolaget LM Ericsson (publ), 164 83 Stockholm (SE)
(72) Inventor: TAN BERGSTRÖM, Mattias, SE-120 71 Stockholm (SE); DUDDA, Torsten, 52064 Aachen (DE)
(74) Representative: Ericsson
(86) International application number: PCT/SE2016/050549
(87) International publication number: WO 2017/052439

(56) References cited:
- QUALCOMM INCORPORATED: "Traffic steering for solution without ANDSF", 3GPP DRAFT; S2-141610_RAN_SOLUTION_NOANDSF_DP V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Phoenix, Arizona, USA; 20140519 - 20140523 19 May 2014 (2014-05-19), XP050902202, Retrieved from the Internet: URL:http://www.3gpp.org/ftp/Meetings_3GPP_ SYNC/SA/SA2/Docs/ [retrieved on 2014-05-19]
- ZTE: "Analysis for use cases of unavailability of RAN assistance information", 3GPP DRAFT; R2-143112-ANALYSIS FOR USE CASES OF UNAVAILABILITY OF RAN ASSISTANCE INFO, 3RD GENERATION PARTNERSHIP PROJECT (3GPP), MOBILE COMPETENCE CENTRE ; 650, ROUTE DES LUCIOLES ; F-06921 SOPHIA-AN , vol. RAN WG2, no. Dresden, Germany; 20140818 - 20140822 17 August 2014 (2014-08-17), XP050794237, Retrieved from the Internet: URL:http://www.3gpp.org/ftp/Meetings_3GPP_ SYNC/RAN2/Docs/ [retrieved on 2014-08-17]
- BROADCOM CORPORATION: "Some Considerations for developing RAN rules for WLAN/3GPP Radio Interworking", 3GPP DRAFT; R2-142071-FRAMEWORK FOR RAN RULES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, South Korea; 20140519 - 20140523 18 May 2014 (2014-05-18), XP050793309, Retrieved from the Internet: URL:http://www.3gpp.org/ftp/Meetings_3GPP_ SYNC/RAN2/Docs/ [retrieved on 2014-05-18]
- LG ELECTRONICS INC: "Handling of the RAN assistance information", 3GPP DRAFT; R2-143723 HANDLING OF THE RAN ASSISTANCE INFORMATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Dresden, Germany; 20140818 - 20140822 17 August 2014 (2014-08-17), XP050794678, Retrieved from the Internet: URL:http://www.3gpp.org/ftp/Meetings_3GPP_ SYNC/RAN2/Docs/ [retrieved on 2014-08-17]
- '3rd Generation Partnership Project; Technical Specification Group Radio Access Network; Evolved Universal Terrestrial Radio Access (E-UTRA); Radio Resource Control (RRC); Protocol specification (Release 12' 3GPP TS36.331 V12.6.0 XP055473371
- '3rd Generation Partnership Project; Technical Specification Group Radio Access Network; Evolved Universal Terrestrial Radio Access (E-UTRA); User Equipment (UE) procedures in idle mode (Release 12' 3GPP TS36.304 V12.5.0 XP055473380

## Description

Embodiments herein relate to a terminal and a method therein. In particular, it relates to inter Radio Access Technologies (RAT) access selection.

### BACKGROUND

Communication devices such as terminals are also known as e.g. User Equipments (UE), mobile terminals, wireless terminals and/or mobile stations. Terminals are enabled to communicate wirelessly in a cellular communications network or wireless communication system, sometimes also referred to as a cellular radio system or cellular networks. The communication may be performed e.g. between two terminals, between a terminal and a regular telephone and/or between a terminal and a server via a Radio Access Network (RAN) and possibly one or more core networks, comprised within the cellular communications network.

Terminals may further be referred to as mobile telephones, cellular telephones, laptops, or surf plates with wireless capability, just to mention some further examples. The terminals in the present context may be, for example, portable, pocket-storable, handheld, computer-comprised, or vehicle-mounted mobile devices, enabled to communicate voice and/or data, via the RAN, with another entity, such as another terminal or a server.

The cellular communications network covers a geographical area which is divided into cell areas, wherein each cell area being served by an access node such as a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the terminals within range of the base stations. In the context of this disclosure, the expression Downlink (DL) is used for the transmission path from the base station to the mobile station. The expression Uplink (UL) is used for the transmission path in the opposite direction i.e. from the mobile station to the base station.

In 3rd Generation Partnership Project (3GPP) Long Term Evolution (LTE), base stations, which may be referred to as eNodeBs or even eNBs, may be directly connected to one or more core networks.

3GPP LTE radio access standard has been written in order to support high bitrates and low latency both for uplink and downlink traffic, i.e. data traffic. All data transmission is in LTE controlled by the radio base station.

Please note that the term "traffic" relates to data traffic, and further, the terms "traffic", "data transfer" and "data transmissions" are used interchangeable herein.

A wireless Local Area Network (WLAN) technology known as "Wi-Fi" has been standardized by IEEE in the 802.11 series of specifications, i.e., as "IEEE Standard for Information technology-Telecommunications and information exchange between systems. Local and metropolitan area networks-Specific requirements. Part 11: Wireless LAN Medium Access Control (MAC) and Physical Layer (PHY) Specifications"). As currently specified, Wi-Fi systems are primarily operated in the 2.4 GHz or 5 GHz bands.

The IEEE 802.11 specifications regulate the functions and operations of the Wi-access points or wireless terminals, collectively known as "stations" or "STA," in the IEEE 802.11, including the physical layer protocols, Medium Access Control (MAC) layer protocols, and other aspects needed to secure compatibility and inter-operability between access points and portable terminals. Because Wi-Fi is generally operated in unlicensed bands, communication over Wi-Fi may be subject to interference sources from any number of both known and unknown devices. Wi-Fi is commonly used as wireless extensions to fixed broadband access, e.g., in domestic environments and in so-called hotspots, like airports, train stations and restaurants.

Recently, Wi-Fi has been subject to increased interest from cellular network operators, who are studying the possibility of using Wi-Fi for purposes beyond its conventional role as an extension to fixed broadband access. These operators are responding to the ever-increasing market demands for wireless bandwidth, and are interested in using Wi-Fi technology as an extension of, or alternative to, cellular radio access network technologies. Cellular operators that are currently serving mobile users with, for example, any of the technologies standardized by the 3GPP, including the radio-access technologies known as LTE, Universal Mobile Telecommunications System/Wideband Code-Division Multiple Access, and Global System for Mobile Communications (GSM), see Wi-Fi as a wireless technology that may provide good additional support for users in their regular cellular networks.

As used herein, the term "operator-controlled Wi-Fi" indicates a Wi-Fi deployment that on some level is integrated with a cellular network operator's existing network, where the operator's radio access network(s) and one or more Wi-Fi wireless access points may even be connected to the same core network and provide the same or overlapping services. Currently, several standardization organizations are intensely active in the area of operator-controlled Wi-Fi. In 3GPP, for example, activities to connect Wi-Fi access points to the 3GPP-specified core network are being pursued. In the Wi-Fi Alliance (WFA), activities related to certification of Wi-Fi products are undertaken, which to some extent is also driven from the need to make Wi-Fi a viable wireless technology for cellular operators to support high bandwidth offerings in their networks. In these standardization efforts, the term "Wi-Fi offload" is commonly used and indicates that cellular network operators seek means to offload traffic from their cellular networks to Wi-Fi, e.g., during peak-traffic-hours and in situations when the cellular network needs to be off-loaded for one reason or another, e.g., to provide a requested quality-of-service, to maximize bandwidth, or simply for improved coverage.

Using WiFi/WLAN, the two terms WiFi and WLAN are used interchangeably throughout this document, to offload traffic from the mobile networks is becoming more and more interesting from both the operator's and end user's points of view. Some of the reasons for this tendency are:
- Additional frequency: by using WiFi, operators may access an additional 85MHz of radio bandwidth in the 2.4GHz band and another (close to) 500MHz in the 5GHz band.
- Cost: From the operator's point of view, Wi-Fi uses unlicensed frequency that is free of charge. On top of that, the cost of Wi-Fi Access Points (APs), both from Capital Expense (CAPEX) and Operational Expenses (OPEX) aspects, is considerably lower than that of a 3GPP base station such as BS/eNB. Operators may also take advantage of already deployed APs that are already deployed in hotspots such as train stations, airports, stadiums, shopping malls, etc. Most end users are also currently used to having Wi-Fi for free at home, as home broadband subscriptions are usually flat rate, and public places.
- Terminal support: Many UEs, including virtually all smartphones, and other portable devices currently available in the market, support Wi-Fi. In the WiFi world, the term Station (STA) is used instead of UE, and as such the terms UE, STA and terminal are used interchangeably in this document.
- High data rate: Under low interference conditions and assuming the user is close to the Wi-Fi AP, Wi-Fi may provide peak data rates that outshine that of current mobile networks, for example, theoretically up to 600Mbps for IEEE 802.11n deployments with Multiple Input Multiple Output (MIMO).

For a wireless operator, offering a mix of two technologies that have been standardized in isolation from each other raises the challenge of providing intelligent mechanisms for co-existence. One area that needs these intelligent mechanisms is connection management.

Many of today's portable terminals support Wi-Fi in addition to one or several 3GPP cellular technologies. In many cases, however, these terminals essentially behave as two separate devices, from a radio access perspective. The 3GPP radio access network and the UE-based modems and protocols that are operating pursuant to the 3GPP specifications are generally unaware of the wireless access Wi-Fi protocols and modems that may be simultaneously operating pursuant to the 802.11 specifications. Techniques for coordinated control of these multiple radio-access technologies are needed.

### Terminal modes in LTE

In LTE two terminal Radio Resource Control (RRC) protocol modes have been specified; RRC Idle mode and RRC Connected mode.

Connected mode enabled unicast data communication. When a terminal is in connected mode the terminal will have an RRC connection established which allows dedicated signalling from the network to the terminal.

To reduce power consumption, when data transfer is not on going, the terminal may be sent to idle mode in LTE. In idle mode unicast data transfer is not possible. A terminal in idle mode is selecting, according to some rules specified in 3GPP TS 36.304 v11.4.0, a cell on which it is camping. Camping is defined in 3GPP TS 36.304 v11.4.0. The terminal will read the broadcasted information on the cell which it is camping on which controls the terminal behaviour.

In LTE the network controls the transition from connected to idle mode.

### WLAN/3GPP radio interworking

Work has started in 3GPP to enable interworking between 3GPP and WLAN. The focus of this work is on how steering of a terminal's traffic, i.e. data transmissions, should be performed between 3GPP and WLAN.

In some proposed solutions the terminal will, according to some rules steer traffic from 3GPP to WLAN and from WLAN to 3GPP, or send a measurement report regarding WLAN to the 3GPP network. In the measurement reporting alternative the RAN may, based on the WLAN measurement report and other information known to the network, send a traffic steering command to the terminal indicating that the terminal should steer traffic from/to the WLAN.

These rules comprise thresholds for parameters. If the parameters exceeds / falls below the associated thresholds the terminal should take an action. One action may be that the UE should perform traffic steering from/to WLAN, another action may be that the UE should send a measurement report containing WLAN measurements to the 3GPP network which may then be used by the 3GPP network to decide whether to send a traffic steering command to the terminal telling the terminal to steer traffic from/to WLAN.

One example rule may be that if a parameter LTE Reference Signal Received Power (RSRP) falls below the threshold value -100 dBm and the parameter WLAN Received Signal Strength Indication (RSSI) exceeds the threshold value -90 dBm, the terminal should steer traffic from 3GPP to WLAN.

It has been discussed that the parameters should be sent to the terminal by broadcasting and/or by dedicated signalling. A terminal which is in idle mode should read and apply the broadcasted parameters. However, a terminal in connected mode may receive dedicated parameters to allow per terminal control by the network. A terminal which has received dedicated parameters will apply these instead of the broadcasted thresholds.

If, when a terminal has steered the traffic from 3GPP to WLAN, the terminal has no more traffic in the 3GPP network the network may indicate to the terminal that it should enter idle mode. Upon entering idle mode should read and apply the broadcasted parameters. <page 5a>

### SUMMARY

It is an object of embodiments herein to provide an improved way of inter RAT access selection.

Document "Traffic steering for solution without ANDSF", Qualcomm Inc., S2-141610, discloses that in case no RAN assistance information is available, default thresholds are applied for WLAN-to-RAN return.

According to a first aspect of embodiments herein, the object is achieved by a method performed by a terminal for inter Radio Access Technology, RAT, access selection. The terminal is capable to operate in one or more RATs. The terminal determines whether or not the terminal is configured with Radio Access Network, RAN, assistance parameters relating to inter RAT access selection. When it is determined that the terminal is not configured with RAN assistance parameters, acting according to a first rule for inter RAT access selection.

According to a first aspect of embodiments herein, the object is achieved by a terminal for inter Radio Access Technology, RAT, access selection, the terminal being capable to operate in one or more RATs. The terminal is configured to:
Determine whether or not the terminal is configured with Radio Access Network, RAN, assistance parameters relating to inter RAT access selection; and
when it is determined that the terminal is not configured with RAN assistance parameters, act according to a first rule for inter RAT access selection.

Since the terminal determines whether it is configured with RAN assistance parameters relating to inter RAT access selection, and in case not being configured with RAN assistance parameters acting according to the first rule for inter RAT access selection, the terminal knows how to act for inter RAT access selection and the usage of outdated RAN assistance parameters for inter RAT access selection is avoided for the terminal. Even though some embodiments have been summarized above, the claimed subject matter is defined in the attached claims 1-5.

### BRIEF DESCRIPTION OF THE DRAWINGS

Examples of embodiments herein are described in more detail with reference to attached drawings in which:
- Figure 1: is a schematic block diagram illustrating an example of a communications network.
- Figure 2: is a schematic block diagram illustrating an example of a communications network.
- Figure 3: is a schematic diagram illustrating use of RAN assistance parameters.
- Figure 4: is a schematic diagram illustrating use of RAN assistance parameters.

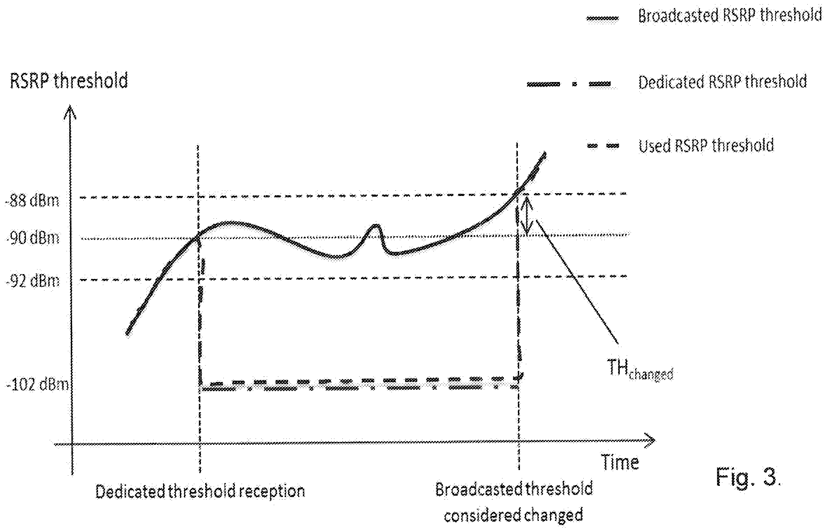

- Figure 3: is a flowchart depicting embodiments of a method in a first network node.

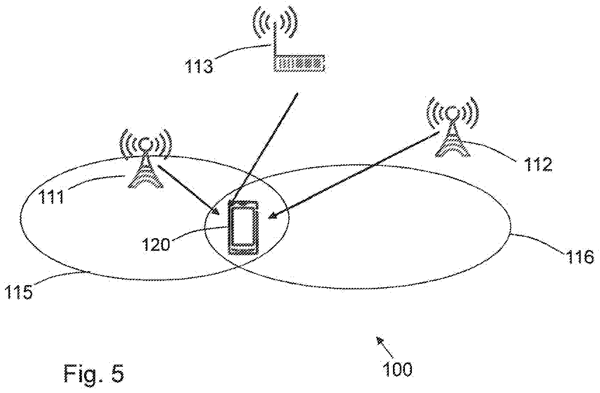

- Figure 5: is a schematic block diagram illustrating embodiments of a communications network.

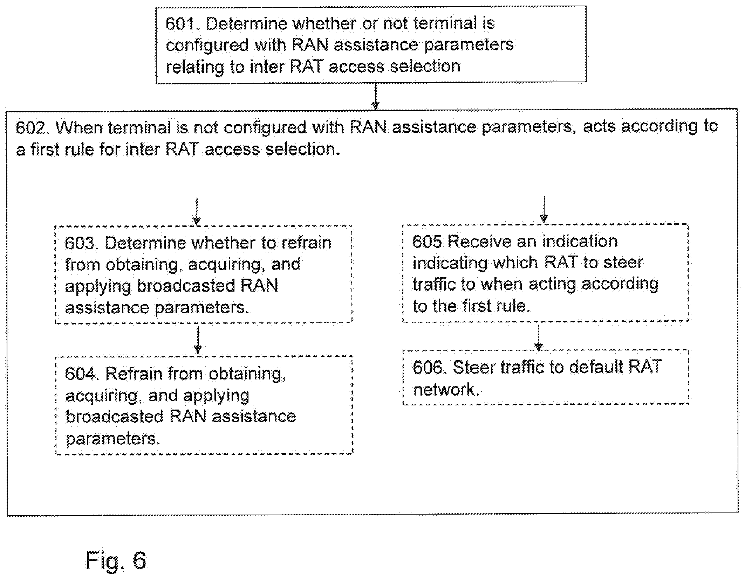

- Figure 6: is a flowchart depicting embodiments of a method in a terminal.

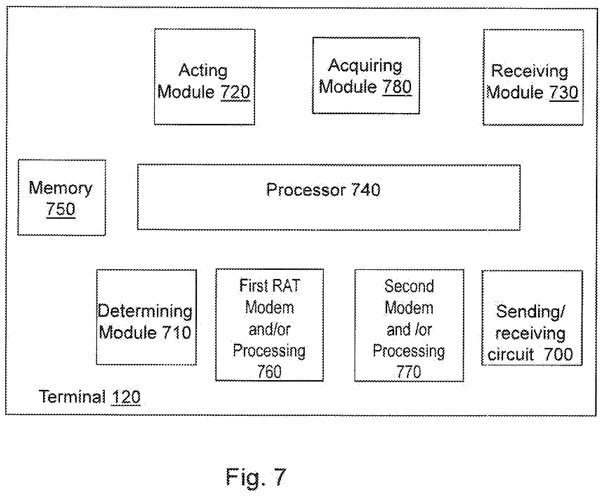

- Figure 7: is a schematic block diagram illustrating embodiments of a terminal.

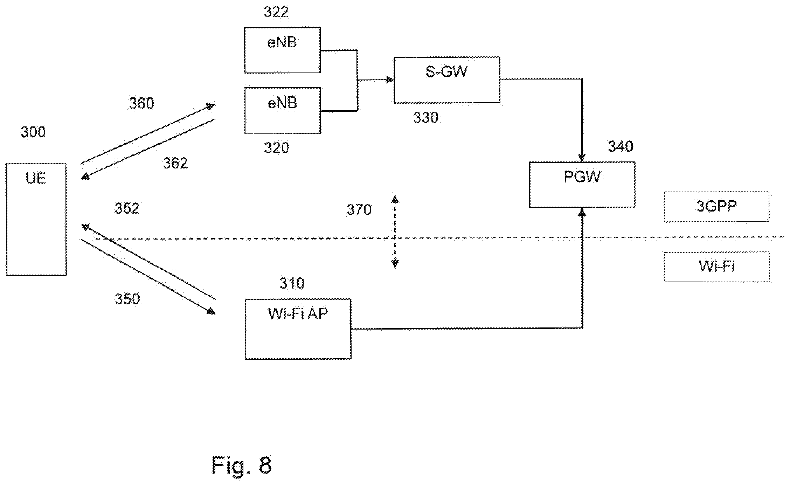

- Figure 8: is a schematic block diagram illustrating embodiments of a network.

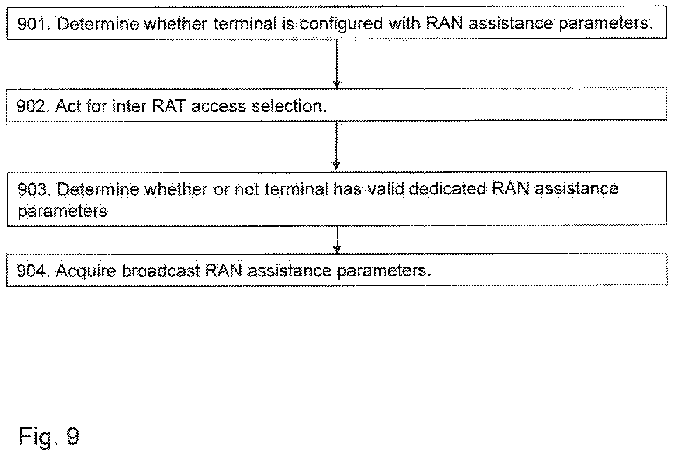

- Figure 9: is a flowchart depicting embodiments of a method.

### DETAILED DESCRIPTION

As part of developing embodiments herein, related art and a problem will first be identified and discussed.

According to the procedure discussed in 3GPP so far regarding how thresholds or parameters should be handled it will not be possible to achieve per terminal thresholds or parameters in idle mode as the terminal will apply the broadcasted thresholds when entering idle mode. Hence, a terminal which has its traffic steered to WLAN and therefore entered idle mode will apply the broadcasted thresholds and per terminal thresholds for traffic steering back from WLAN to 3GPP is not possible. The thresholds are also referred to as "RAN assistance parameter" herein.

Furthermore, if based on the broadcasted thresholds, conditions for steering traffic to WLAN are not met, the terminal will steer its traffic back to the 3GPP network and return to connected mode where it may again be provided with terminal specific thresholds, by dedicated signalling, triggering steering of traffic to WLAN and entering idle mode w r t 3GPP network. I.e., an undesirable ping-pong condition may arise where traffic is continuously moved back and forth between WLAN and 3GPP network. Ping-pong conditions reduce performance.

With current solutions for WLAN/3GPP Radio interworking solutions it is not possible to achieve per terminal thresholds for controlling the access selection and/or traffic steering between 3GPP and WLAN for a terminal in idle mode, which limits flexibility and creates ping-ponging problems.

To handle this problem some methods may be used for how a terminal shall handle a dedicated signaled threshold such that frequent updating of the threshold may be avoided and hence highly loaded control channels are avoided.

It may be possible to apply these procedures to non-thresholds also, the term parameters refer to thresholds and non-thresholds. One non-threshold parameter that may be applied to is 3GPP load indication. Assume that the 3GPP RAN broadcasts its load in per cent. The RAN may send the load with dedicated signal AND broadcast signaling, and a UE such as a terminal, may have got a dedicated load figure of 70 % while load of 40 % is broadcasted. The UE such as the terminal may then apply a "threshold tracking" behavior and RAT access selection according to this load.

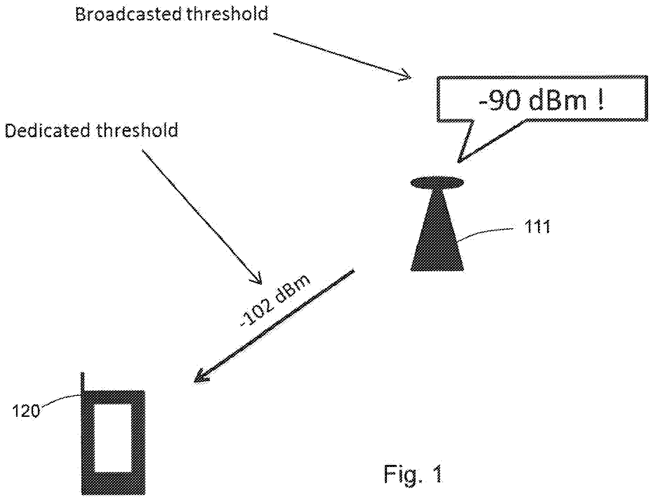

The network such as a network node may send these parameters such as thresholds to the terminal by dedicated signaling, e.g. referred herein as dedicated threshold, or by broadcast signaling, e.g. referred herein as broadcasted threshold. One example of a threshold is RSRP threshold which tells the terminal which should be the measured RSRP in LTE for the terminal to connect to WLAN. E.g. if the RSRP threshold is -100 dBm the terminal should connect to WLAN if the terminal's measured RSRP is below -100 dBm. The terminal may receive parameters such as thresholds for multiple parameters, e.g. one threshold for RSRP and one for WLAN load. It may be so that different behaviors are applied for different threshold values, e.g. the terminal may apply the behavior of the RSRP threshold while applying another behavior for the WLAN load threshold. See an example in Figure 1 where the threshold value -90 dBm is broadcasted and the network such as the network node has signaled to the terminal 120 a dedicated threshold value -102 dBm. Figure 1 depicts examples of Broadcasted and dedicated parameters such as e.g. thresholds.

As described above, the terminal may receive RAN assistance parameters such as a threshold with dedicated signaling or by broadcast signaling. When it herein is said "corresponding threshold" it is referred to that e.g. the broadcasted RSRP threshold corresponds to the dedicated RSRP threshold and the dedicated WLAN load threshold corresponds to the broadcasted WLAN load threshold, etc.

It is herein sometimes referred to that a terminal performs actions upon entering idle state, however it should be appreciated that this is just an example and described examples may be applied to other states. For example, in Universal Mobile Terrestrial System (UMTS) more states are defined in which the embodiments may be applied, e.g. CELL_FACH, CELL_PCH and URA_PCH. The RRC idle mode, which means no connection, has the lowest energy consumption. The states in the RRC connected mode are CELL_DCH (Dedicated Channel), CELL_FACH (Forward access channel), CELL_PCH (Cell Paging channel) and URA_PCH (URA Paging channel). The methods described herein may even be applied when a UE such as the terminal 120 is in connected state, or equivalent mode in other RAT's. The benefit of applying these methods for connected mode is, for example, that the amount of signaling due to threshold or parameter updating is reduced.

Some methods for how a terminal shall handle a dedicated signaled threshold such that frequent updating of the threshold may be avoided and hence highly loaded control channels are avoided will now be described.

### Conditional threshold retention upon cell change

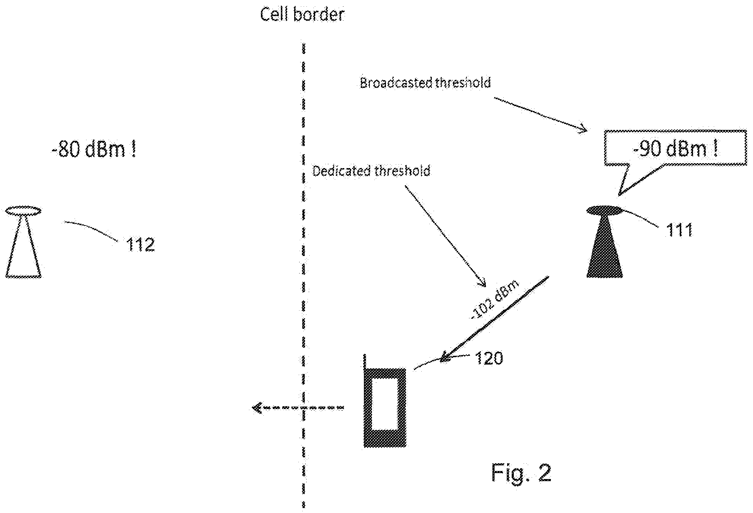

In this example, the terminal may act according to a dedicated RAN assistance parameter such as a threshold after a cell change given that certain conditions are fulfilled. When the conditions are no longer fulfilled the terminal 120 will stop acting according to the dedicated threshold and instead act according to the corresponding broadcasted threshold, see an example in Figure 2. Figure 2 illustrates an example where a terminal will stop act according to a dedicated threshold upon cell change due to a large difference between broadcasted thresholds in an old cell and a new cell.

### Threshold retention based on change of corresponding broadcasted threshold.

In this example the terminal 120 will maintain and act according to a dedicated RAN assistance parameter such as a threshold until the corresponding broadcasted threshold change. In one alternative of these embodiments the broadcasted thresholds are considered changed, also referred to as updated, when the size of the change exceeds a certain threshold TH_{changed}. The size of the change may be defined, e.g., as the difference between current threshold value and the thresholds value at the time when the terminal 120 entered IDLE mode alternatively the size of the change may be defined as the difference between the current threshold value and the threshold value at the time when the dedicated threshold was signalled. See **Figure 3.** Figure 3 depicts example showing threshold retention based on behaviour of corresponding broadcasted threshold.

For example, if the terminal has received a dedicated RSRP threshold of -102 dBm and the corresponding broadcasted threshold, i.e. the threshold for RSRP, is -90 dBm the terminal will maintain and act according to the RSRP threshold -102 dBm until the broadcasted threshold deviated from -90 dBm. Or as an alternative version of this embodiment describes, if the TH_{changed} is 2 dB the terminal 120 will maintain and act according to the RSRP threshold -102 dBm as long as the broadcasted threshold value stays within the range -92 dBm to -88 dBm, i.e., within 2 dB of -90 dBm.

### Threshold tracking

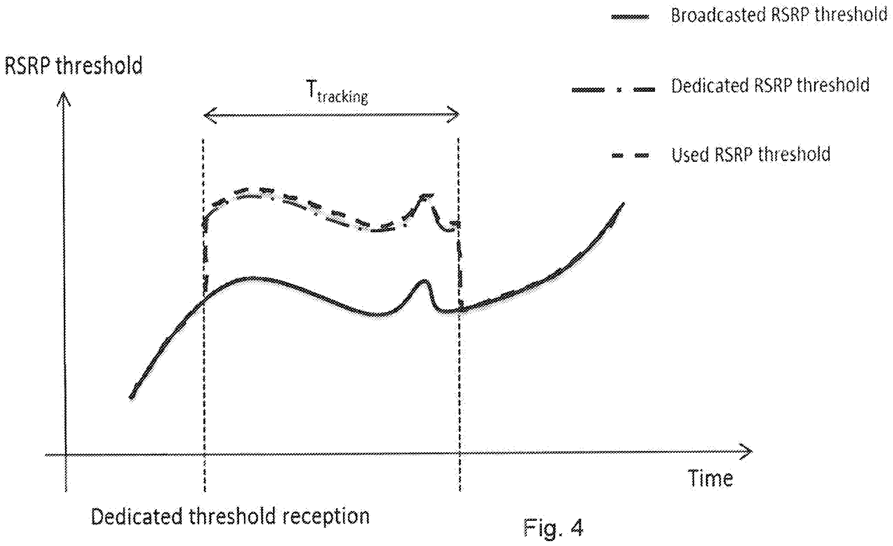

According to this example,-the terminal 120 will update a RAN assistance parameter such as threshold received by dedicated signalling according to certain rules. This may be referred to as threshold tracking or parameter tracking. **Figure 4** illustrates am example showing threshold tracking.

An example of such a rule is to update a threshold received with dedicated signalling by considering the change of the corresponding broadcasted thresholds. For example if the terminal observes that the broadcasted threshold is increased by X the terminal would update the corresponding dedicated threshold increasing it with X. For example, the terminal has received a dedicated RSRP threshold of -102 dBm and the broadcasted RSRP threshold is -90 dBm. If the broadcasted RSRP threshold is increased to -86 dBm, the terminal will then update the RSRP threshold value accordingly, i.e. to - 102 dBm + 4 dB = -98 dBm. The terminal may be configured such that it will perform threshold tracking given certain conditions. If one or more of the conditions are not fulfilled the terminal may stop threshold tracking and apply the broadcasted threshold

For the feature of LTE-WLAN interworking there may be two types of terminals; those terminals that are capable of steering data traffic according to the RAN rules in IDLE mode, i.e. rules using the RAN assistance parameters, and those that do not. A terminal capable of those rules may read System Information Block (SIB)17 and apply the "RAN assistance parameters" received in SIB17 to determine how to steer the data traffic. However in the case the terminals are not capable of this may possibly result in that the terminal would use unsuitable thresholds.

Embodiments herein relate to a terminal determining whether or not to refrain from acquiring broadcast RAN assistance parameters, and terminal actions due to absence of such parameters.

According to embodiments herein, a terminal not capable of this may refrain from reading SIB17 to receive the broadcasted RAN assistance parameters, i.e. the terminal 120 will apply no RAN assistance parameters, which may be handled according to embodiments herein.

### Terminologies

The following commonly terminologies are used in the embodiments and are elaborated below:
Network node: In some embodiments the non-limiting radio network node is more commonly used and it refers to any type of radio network node serving a terminal or UE and/or connected to other network node or network element or any radio node from where terminal receives signal. Examples of radio network nodes are Node B, base station (BS), multi-standard radio (MSR) radio node such as MSR BS, eNode B, network controller, radio network controller (RNC), base station controller, relay, donor node controlling relay, base transceiver station (BTS), access point (AP), transmission points, transmission nodes, RRU, RRH, nodes in distributed antenna system (DAS) etc.

Network node: In some embodiments the general term "network node" is used as corresponding to any type of radio network node or any network node, which communicates with at least a radio network node. Examples of network node are any radio network node stated above, core network node (e.g. MSC, MME etc.), O&M, OSS, SON, positioning node (e.g. E-SMLC), MDT etc.

Network: The term network may be used herein and it may refer to any network node e.g. as described above and herein.

Terminal: In some embodiments the non-limiting term terminal is used and may refer to any type of wireless device communicating with a radio network node in a cellular or mobile communication system. Examples of a terminal are User Equipment (UE), UE capable of machine to machine communication, PDA, iPad, Tablet, mobile terminals, smart phone, laptop embedded equipped (LEE), laptop mounted equipment (LME), USB dongles etc.

**Figure 5** depicts an example of a **wireless communications network 100** in which embodiments herein may be implemented. The wireless communications network100 comprises multiple wireless communication networks using different RATs such as LTE, WCDMA, GSM network, any 3GPP cellular network, WLAN also referred to as WiFi, Wimax, or any RAT.

The wireless communications network 100 comprises a plurality of network nodes whereof two, a **network node 111 and a second network node 112** are depicted in Figure 5. The network node 111 and the second network node 112 may each be a transmission point such as a radio base station, for example an eNB, an eNodeB, or an Home Node B, an Home eNode B or any other network node capable to serve a user equipment or a machine type communication device in a wireless communications network. The wireless communications network 100 may further comprise an **access point** 113 such as e.g. an access point for a WLAN.

The network node 111 may serve a **first cell 115,** and the second network node 112 may serve a **second cell 116.**

A **terminal 120** also referred to as a user equipment or UE is operating in the wireless communication network 100. The terminal 120 may e.g. be a user equipment, a mobile terminal or a wireless terminal, a mobile phone, a computer such as e.g. a laptop, a Personal Digital Assistants (PDAs) or a tablet computer, sometimes referred to as a surf plate, with wireless capability, or any other radio network units capable to communicate over a radio link in a wireless communications network. Please note the term terminal used in this document also covers other wireless devices such as Machine to machine (M2M) devices.

The terminal 120 is capable to operate in one or more RATs, such as e.g. LTE, WCDMA, GSM network, any 3GPP cellular network, WLAN also referred to as WiFi, Wimax, or any RAT. This means that the terminal 120 may support Wi-Fi in addition to one or several 3GPP cellular technologies.

In some embodiments herein the terminal 120 handles the use of RAN assistance parameters such as e.g. specific thresholds for WLAN and 3GPP interworking in idle mode. Example methods are described to avoid the usage of outdated thresholds for terminals in IDLE mode which may possibly result in that the terminal 120 would use unsuitable thresholds.

In some embodiments the terminal 120 will refrain from obtaining and/or using broadcasted RAN assistance parameters e.g. upon discard of corresponding dedicated RAN assistance parameters, i.e. sent with dedicated signaling. The corresponding dedicated RAN assistance parameters may e.g. be discarded by the terminal 120 when a timer expires, when the UE performs cell reselection, moving between different states or modes, etc. Further, in some embodiments the terminal 120 will steer the data traffic according to a default rule when the terminal 120 has no RAN assistance parameters, alternatively the UE, such as the terminal 120, steers the data traffic according to a default rule upon discard of the dedicated RAN assistance parameters. The benefit of these embodiments is that it would be possible to reuse much of the methods already defined in the LTE specifications such as e.g. 3GPP TS 36.304 v12.5.0 and 3GPP TS 36.331 v12.6.0, to achieve a traffic steering command, instead of needing to define a new explicit command to indicate traffic steering. This has the benefit that it would minimize changes to a terminal 120 and eNB such as the network node 111 implementation as a traffic steering command may be achieved by reusing much of already existing mechanism, hence additional costs and complexity can be reduced.

Embodiments provided herein may also address a scenario when the terminal 120 has not yet received any RAN assistance parameters, e.g. which may be the case when the terminal 120 has been turned on before any dedicated RAN assistance parameters has been received.

Further, according to current LTE specifications the terminal 120 may only start a timer used for discarding dedicated RAN assistance parameter upon entering IDLE mode, it would with the embodiments described herein not result in a scenario where the terminal 120 discards dedicated RAN assistance parameters when the terminal 120 remain in CONNECTED mode. This has the benefit that the eNB such as the network node 111 does not need to repeatedly send traffic steering commands to a terminal 120 which remains in CONNECTED mode, as such a terminal 120 would maintain the RAN assistance parameters until e.g. eNB indicates to the terminal 120 to remove the RAN assistance parameters.

Example of some embodiments of a method performed by the terminal 120 for inter RAT access selection will now be described with reference to a flowchart depicted in Figure 6. The term inter RAT access selection may comprise "access selection" and/or "traffic steering" and/or "traffic routing.

As mentioned above, the terminal 120 is capable to operate in one or more RATs, such as WLAN RAT e.g. WiFi RAT, in addition to one or several 3GPP RATs.

In an example scenario the terminal 120 handles the use of RAN assistance parameters such as e.g. for WLAN and 3GPP such as LTE interworking e.g. when the terminal 120 is in idle mode or when the terminal 120 has not yet received any RAN assistance parameters, e.g. which may be the case when the terminal 120 has been turned on before any dedicated RAN assistance parameters has been received. Depending on whether or not the terminal 120 is configured with RAN assistance parameters, it will act according to a first or a second rule. Embodiments herein relate to the terminal 120 when not being configured with RAN assistance parameters and acting according to the first rule, such as e.g. determining whether or not to refrain from acquiring broadcast RAN assistance parameters, and terminal actions due to absence of such parameters.

However, when the terminal 120 is configured with RAN assistance parameters it will act according to a second rule and the terminal 120 may e.g. read SIB17 and apply the "RAN assistance parameters" received in SIB17 to determine how to steer the data traffic.

The method comprises the following actions, which actions may be taken in any suitable order.

### Action 601

In order to know how to act for inter RAT access selection e.g. whether to steer data traffic such as from 3GPP to WLAN or from WLAN to 3GPP for example when the terminal is in idle mode, the terminal 120 determines whether or not the terminal 120 is configured with RAN assistance parameters relating to inter RAT access selection. This will be performed to avoid the usage of outdated RAN assistance parameters for the terminal 120 e.g. when being in idle mode.

### Action 602

When it is determined that the terminal 120 is not configured with RAN assistance parameters, the terminal 120 acts according to a first rule for inter RAT access selection.

### Action 603

When acting according to the first rule for inter RAT access selection the terminal 120 may determine whether or not to refrain from any one or more out of: obtaining, acquiring, and applying broadcasted RAN assistance parameters, based on one or more conditions.

The on one or more conditions may comprise:
A release of the terminal 120, e.g. if the terminal 120 is of one release the terminal 120 would refrain from obtaining, acquiring, or applying broadcasted RAN assistance parameters, while if the terminal 120 is of another release the terminal 120 would acquire broadcasted RAN assistance parameters.

Network configuration, the terminal 120 may be configured with a parameter, e.g. referred to as fallbackToBroadcastThresholdslnldle, if the terminal 120 shall refrain from obtaining, acquiring, or applying broadcasted RAN assistance parameters e.g. upon discard of RAN assistance parameters.

Capabilities of the terminal 120, the terminal 120 may not be capable of obtaining a broadcasted message comprising the broadcasted RAN assistance parameters.

A cell which the terminal 120 is associated with, e.g. if the terminal 120 has changed which cell it is associated with since it received the dedicated parameters then the terminal 120 may apply a first behaviour while if it has not changed cell it may apply a second behaviour.

### Action 604

In some embodiments the first rule for inter RAT access selection further comprises that the terminal 120 refrains from any one or more out of: obtaining, acquiring, and applying broadcasted RAN assistance parameters. This may e.g. be performed after determining to refrain from the broadcasted RAN assistance parameters in action 603 and it may result in the terminal applies no RAN assistance parameters. This may e.g. be performed upon discard of corresponding dedicated RAN assistance parameters, i.e. sent with dedicated signaling.

### Action 605

The refraining from broadcasted RAN assistance parameters may result in that the terminal 120 applies no RAN assistance parameters and do not know which RAT to steer the traffic to. However, in some embodiments the terminal 120 may receive an indication from a network node 111, 112, which indication indicates which RAT the terminal 120 shall steer traffic to when acting according to the first rule. Examples of networks to steer to when acting according to the first rule may e.g. be WLAN, LTE, and UMTS. The received indication may be a Radio Resource Control, RRC indication.

Another alternative is that it is specified in a specification which is the default RAT, terminal 120 shall steer traffic to, e.g. it may be defined in a specification such as LTE RRC (3GPP TS 36.331 v12.6.0) that a UE such as the terminal 120 shall steer the traffic to LTE in case of absence of RAN assistance parameters.

### Action 606

The terminal 120 may then act according to the first rule by steering the traffic to the default RAT network, e.g. according to the received indication or as specified in the specification.

The default RAT network may be a network of any one out of: Evolved Universal Terrestrial Radio Access Network, E-UTRAN, and Long Term Evolution, LTE, Wireless Local Area Network, WLAN, and UMTS.

In the following section, the embodiments herein will be illustrated in more detail by a number of exemplary embodiments. It should be noted that these embodiments are not mutually exclusive. Components from one embodiment may be tacitly assumed to be present in another embodiment and it will be obvious to a person skilled in the art how those components may be used in the other exemplary embodiments. Please note that the terms threshold and parameter are used interchangeable. This means that when the term threshold is used it also mean to cover the term parameter.

### Terminal 120 refraining from acquiring broadcast parameters

Thus, in some embodiments the terminal 120 will refrain from obtaining, acquiring, or applying RAN assistance parameters broadcasted by the network, or will simply refrain from using them. This may result in that the terminal 120 applies no RAN assistance parameters. For example, if the terminal 120 discards dedicated RAN assistance parameters corresponding to broadcasted RAN assistance parameters, then the terminal 120 would not have any RAN assistance parameters and will act according the embodiments herein resulting in that the terminal 120 behaviour would not be unspecified. Based on other terminal or UE implementation specific metrics, the terminal 120 would steer traffic between LTE and WLAN. This means that the terminal 120 may steer traffic based on decisions which are made autonomously by the terminal 120, without influence by the network, and this may result in a poor decision since the UE does not consider the whole network in its decision.

Whether or not the terminal 120 refrains from obtaining, acquiring, or applying broadcasted RAN assistance parameters upon discard of RAN assistance parameters may be conditional. I.e. the terminal 120 may evaluate one or more conditions to determine whether the terminal 120 shall acquire broadcasted RAN assistance upon discard of dedicated RAN assistance parameters. Some embodiments herein relates to the conditional refraining from acquiring of broadcast RAN assistance information. E.g. especially network configuration. The refraining from obtaining, acquiring, or applying broadcast RAN assistance parameters may be conditional on one or more criteria and one criterion may be that the network has configured the terminal 120 to do so. The terms condition and rule may be used interchangeably herein.

### Example conditions may comprise any one or more out of:

- **Release** - The terminal 120 considers its release/version. E.g. if the terminal 120 is of a first release the terminal 120 would refrain from obtaining, acquiring, or applying broadcasted RAN assistance parameters, while if the terminal 120 is of a second release the terminal 120 would acquire broadcasted RAN assistance parameters. In an example scenario, the first release may be Release 12 of LTE and the second release may be Release 13 of LTE.
- **Network configuration** - The terminal 120 may determine whether or not to refrain from obtaining, acquiring, or applying broadcast RAN assistance parameters based on network configuration. The terminal 120 may be configured with a parameter, e.g. referred to as fallbackToBroadcastThresholdslnldle, if the terminal 120 shall refrain from obtain broadcasted RAN assistance parameters upon discard of RAN assistance parameters.
- **Terminal/UE capabilities** - The terminal 120 may consider its capabilities when determining whether to refrain from obtaining/using broadcasted RAN assistance parameters. It may be so that some terminals are capable of obtaining, acquiring, or applying the broadcasted message containing the broadcasted RAN assistance parameters and some terminals which are not capable of this. Hence, the terminal 120 may determine whether it is capable of this and if not, it may refrain from obtaining, acquiring, or applying the broadcast RAN assistance parameters.
- **Current selected cell** - Whether or not obtaining, acquiring, or applying of broadcast parameters may be depending on the current selected cell such as e.g. LTE cell, considering also a cell such as e.g. an LTE cell in which the terminal 120 obtained the dedicated RAN assistance parameters. I.e. if the terminal 120 has changed which cell it is associated with since it received the dedicated parameters then the terminal 120 may apply a first behaviour while if it has not changed cell it may apply a second behaviour. For example if the terminal 120 has moved to another cell than the cell where the terminal 120 was when receiving the dedicated parameters, then the terminal 120 may fall back to applying the broadcast parameters, while if the terminal 120 is in the same cell as it received the dedicated parameters from then the terminal 120 may refrain from acquiring the broadcast thresholds.

The benefit of this embodiment, i.e. to refrain from obtaining, acquiring, or applying broadcast RAN assistance parameters is that the terminal 120 may not need to implement the capability of acquiring the broadcast signal wherein the broadcasted version of the RAN assistance parameters are sent. Another benefit is that, even if the terminal 120 implements the functionality to be able to acquire the broadcasted version of the RAN assistance parameters, is that the terminal 120 would not need to do so, depending on conditions above, which saves decoding of the broadcast signalling i.e. battery consumption in the terminal 120.

### Terminal 120 actions due to absence of parameters

When the terminal 120 is not configured with or has refrained from obtained, acquired, or applied the RAN assistance parameters, the terminal 120 may instead perform traffic steering e.g. based on an RRC-indication from an eNB such as the network node 111 or the second network node 112.

In one embodiment the terminal 120 will steer traffic such as the data traffic according to a default rule in the absence of RAN assistance parameters relating to inter RAT access selection. This default rule may be to steer the data traffic to a default network, e.g. a default RAT such as e.g. LTE.

According to the above, the terminal 120 may start applying the default rule in response to absence of RAN assistance parameters. Another possible implementation is that the UE such as e.g. the terminal 120 starts applying the default rule in response to a discarding of RAN assistance parameters. Another possibility is that the terminal 120 starts applying the default rule in response to not being able to acquire RAN assistance parameters.

Which network and/or RAT the UE such as e.g. the terminal 120 shall steer traffic to may be indicated to the terminal 120 by the network such as the network node 111 or the second network node 112, for example by using RRC. Another alternative is that it is specified in a specification which is the default RAT, e.g. it is defined in a specification such as LTE RRC, 3GPP TS 36.331 v12.6.0, that the terminal 120 shall steer traffic to LTE in case of absence of RAN assistance parameters.

According to some embodiments herein, if the UE such as the terminal 120 supporting RAN-controlled LTE-WLAN Interworking (RCLWI) does not support the traffic steering rules defined in TS 36.304, it keeps traffic on WLAN within the configured WLAN mobility set (if any) in RRC_IDLE until WLAN connection fails. A WLAN mobility set is a set of WLANs between which a UE such As the terminal 120 may perform mobility without necessarily providing an indication to the network, e.g. it may be seen as mobility between WLANs in the WLAN mobility set is "transparent" to the network. TS 36.304 is also referred to as 3GPP Technical Specification Group Radio Access Network; Evolved Universal Terrestrial Radio Access (E-UTRA); User Equipment (UE) procedures in idle mode. Also referred to as User Equipment (UE) procedures in idle mode. It is the 12.6.0. version.

An example implementation of the embodiment in this section is illustrated in the below tables. It can be seen that the terminal 120 will determine whether it is configured with either *wlan-OffloadConfigCommon* or *wlan-OffloadConfigDedicated.* And if the terminal 120 has neither of these configured then the terminal 120 will determine that the terminal 120 has no parameters for inter RAT access selection and apply the bold and underlined actions in the example. I.e. the terminal 120 would in that case steer traffic to a default RAT, in this case to "E-UTRAN" , i.e. LTE.

It should be appreciated that even though it says that the terminal 120 shall indicate to upper layers in the terminal 120 to steer traffic from WLAN to E-UTRAN, it may be so that due to upper layer mechanisms the terminal 120 will not actually perform the steering. For example, the terminal 120 is allowed to not obey a traffic steering decision made at lower layers in the terminal 120 e.g. due to end user preference, e.g. if the end user prefers to use WLAN it may be so that the UE such as the terminal 120 never performs the steering as indicated by the text in the below example. The wording "the traffic steering rules" are described in a section 5.6.2 Access network selection and traffic steering rules.

5.6.12.3 in Table 1 refers to the corresponding section in 3GPP TS 36.331 Evolved Universal Terrestrial Radio Access (E-UTRA); Radio Resource Control (RRC); Protocol specification. The version is 12.7.0.

TS 24.312 [66] in Table 1 refers to 3GPP TS 24.312 Access Network Discovery and Selection Function (ANDSF) Management Object (MO). The version is 12.10.0.

TS 36.304 [4] in Table 1 refers to 3rd Generation Partnership Project; Technical Specification Group Radio Access Network; Evolved Universal Terrestrial Radio Access (E-UTRA); User Equipment (UE) procedures in idle mode. The version is 12.6.0

TS 24.302 [28] in Table 1 refers to 3GPP TS 24.302 Access to the 3GPP Evolved Packet Core (EPC) via non-3GPP access networks; Stage 3. The version is 12.10.0.

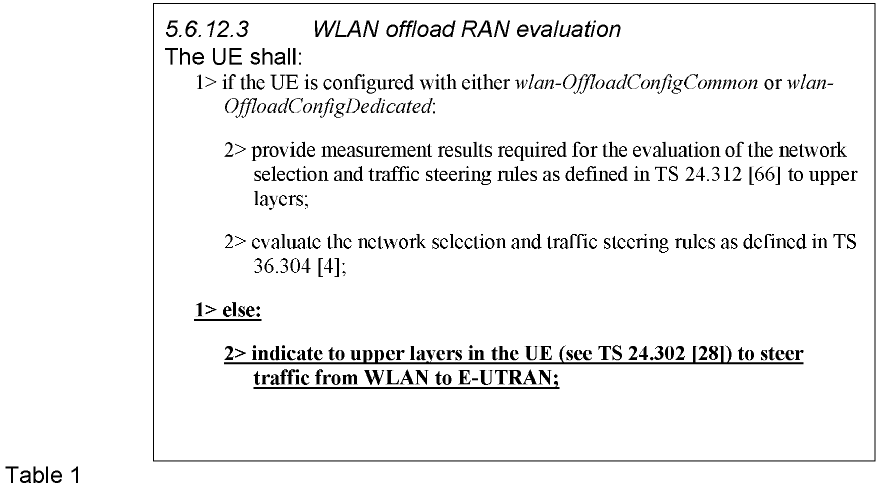

The default behaviour describes above may be coupled with a timer. In current RRC (3GPP TS 36.331 v12.6.0), a timer T350 is used, which is started when the terminal 120 leaves RRC-connected mode and switches to RRC-IDLE mode. When the timer expires or stopped, the UE such as the terminal 120 is supposed to acquire and apply the broadcasted RAN assistance parameters. The expiry time may be configured. The timer is for example stopped when the terminal 120 selects a new cell during RRC-IDLE mode and the new cell is not the cell in which the dedicated RAN assistance parameters were obtained.

In some embodiments, applying the default behaviour is evaluated by the UE such as the terminal 120 at T350 expiry and/or stopping, i.e. in some embodiments only at expiry, in other embodiments both for expiry and stopping. In the example specification below depicted in Table 2, the conditional "network configuration" (see above) acquiring/using the broadcasted RAN assistance parameters at T350 expiry/stopping is shown (changes compared to current specification in bold). Note that this specification excerpt is to be used additionally with the excerpt above.

RPLMN in Table 2 refers to **Registered Public Land Mobile Network**

Section 5.6.12.5 in Table 2 and 3 refers to the corresponding section in 3GPP TS 36.331 Evolved Universal Terrestrial Radio Access (E-UTRA); Radio Resource Control (RRC); Protocol specification. The version is 12.7.0.

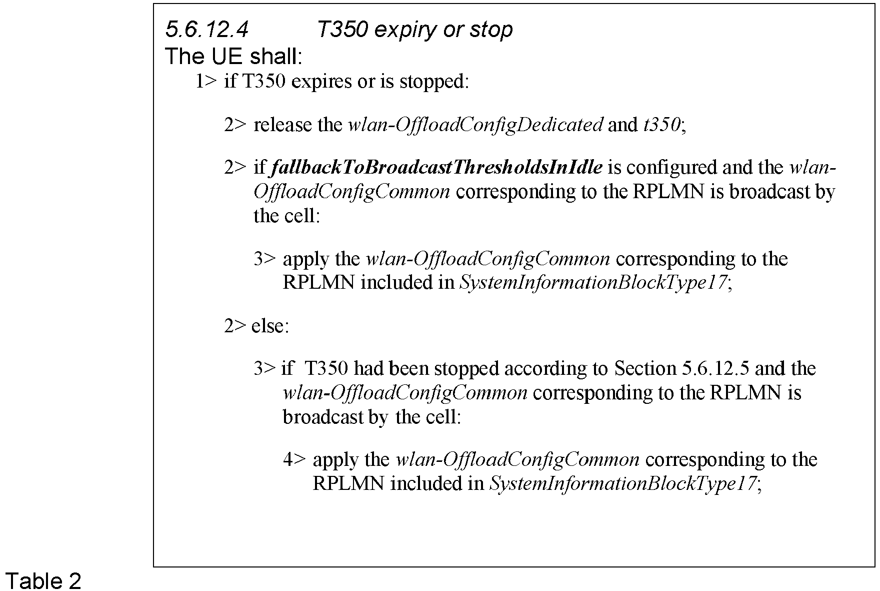

In yet some other embodiments, applying the default behaviour is evaluated at T350 expiry only. When the T350 timer is stopped e.g. due to UE such as terminal 120 selection/reselection of a cell which is not the cell where the terminal 120 obtained the dedicated thresholds such as the RAN assistance parameters, applying the default behaviour is not done. A specification example is given below in table 3. The benefit of this embodiment is that the UE such as the terminal 120 only applies a default fallback to LTE" behaviour when no RAN assistance parameters are obtained, acquired or used, if the terminal 120 is to connect to the same cell, in which it originally obtained the dedicated RAN assistance parameters. I.e. a cell which originally offloaded the terminal 120 to WLAN.

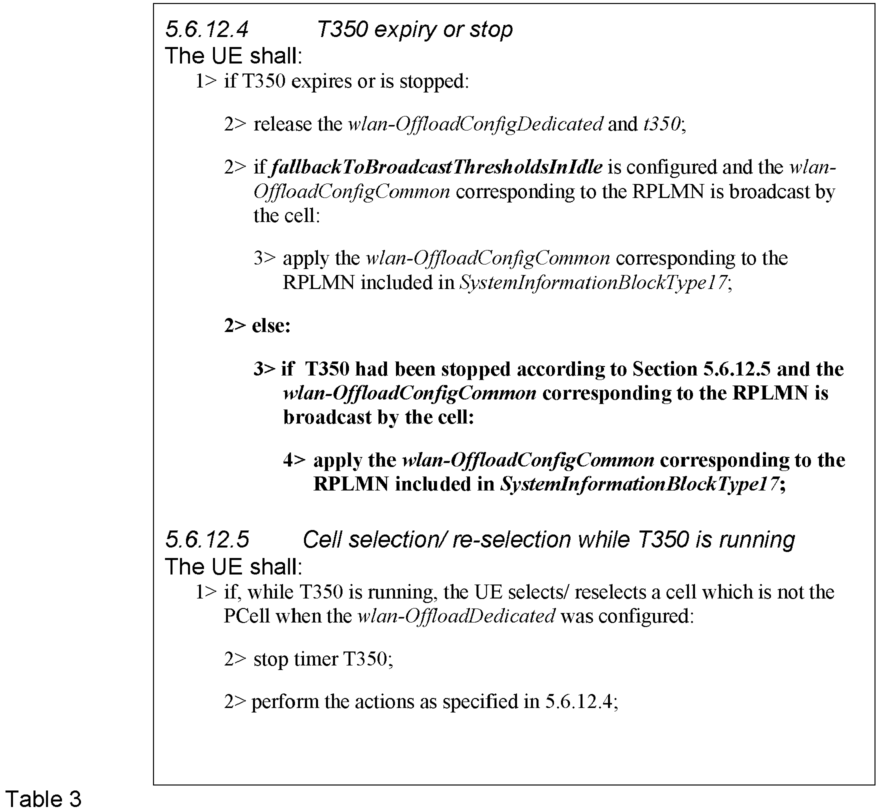

To perform the method actions for inter RAT access selection described above in relation to Figure 6, the terminal 120 may comprise the following arrangement depicted in **Figure 7****.** As mentioned above, the terminal 120 is capable to operate in one or more RATs.

The terminal 120 is configured to, e.g. by means of a **determining module 710,** determine whether or not the terminal 120 is configured with Radio Access Network, RAN, assistance parameters relating to inter RAT access selection.

The terminal 120 may further be configured to, e.g. by means of the determining module 710, determine whether or not to refrain from any one or more out of: obtaining, acquiring, and applying broadcasted RAN assistance parameters, based on one or more conditions. The one or more conditions may be adapted to comprise: a release of the terminal 120, network configuration, capabilities of the terminal 120, a cell which the terminal 120 is associated with.

The terminal 120 is configured to, e.g. by means of an **acting module 720,** when it is determined that the terminal 120 is not configured with RAN assistance parameters, act according to a first rule for inter RAT access selection.

The terminal 120 may further be configured to, e.g. by means of the acting module 720, act according to a first rule for inter RAT access by refraining from any one or more out of: obtaining, acquiring, and applying broadcasted RAN assistance parameters.

The terminal 120 may further be configured to, e.g. by means of the acting module 720, act according to a first rule for inter RAT access by steering traffic to a default RAT network.

The default RAT network may be a network of any one out of: Evolved Universal Terrestrial Radio Access Network, E-UTRAN, and Long Term Evolution, LTE, Wireless Local Area Network, WLAN.

The terminal 120 may be configured to, e.g. by means of a receiving module 730, receive an indication from a network node 111, 112, which indication indicates which RAT the terminal 120 shall steer traffic to when acting according to the first rule.

The terminal the received indication may be adapted to be an RRC indication.

The embodiments herein may be implemented through one or more processors, such as a **processor 740** in the terminal 120 depicted in Figure 7, together with computer program code for performing the functions and actions of the embodiments herein. The program code mentioned above may also be provided as a computer program product, for instance in the form of a data carrier carrying computer program code for performing the embodiments herein when being loaded into the in the terminal 120. One such carrier may be in the form of a CD ROM disc. It is however feasible with other data carriers such as a memory stick. The computer program code may furthermore be provided as pure program code on a server and downloaded to the terminal 120.

The terminal 120 may further comprise a **memory 750** comprising one or more memory units. The memory 120 is arranged to be used to store received information, parameters, thresholds, data, configurations, schedulings, and applications etc. to perform the methods herein when being executed in the terminal 120.

Those skilled in the art will also appreciate that the circuits described below may refer to a combination of analog and digital circuits, and/or one or more processors configured with software and/or firmware, e.g. stored in the memory 750, that when executed by the one or more processors such as the processor 750 in the terminal 120 perform as described above. One or more of these processors, as well as the other digital hardware, may be included in a single application-specific integrated circuitry (ASIC), or several processors and various digital hardware may be distributed among several separate components, whether individually packaged or assembled into a system-on-a-chip (SoC).

Embodiments of the terminal as described above such as e.g. the terminal 120, may be configured to communicating both over a 3GPP-specified access technology and also over an 802.11 Wi-Fi specified access technology. The **processing and modem related to the Wi-Fi parts 760** may be separated from **the processing and modem related to the 3GPP parts 770.** It will be appreciated that the implementation of these portions could be integrated on the same hardware unit, or can be carried out using physically distinct hardware and/or hardware-software combinations. The terminal further comprises **a sending and receiving circuit 780.**

**Figure 8** illustrates a network such as the wireless communications network 100 where **LTE radio access parts 320, 322** and a **Wi-Fi wireless access point 310** are both connected to the same Packet Data Network Gateway **(P-GW) 340.** A P-GW provides connectivity from a **UE 300** such as the terminal 120 to external packet data networks by being the point of exit and entry of traffic for the UE. The UE 300 such as e.g. the terminal 120 is capable of being served both from the Wi-Fi Access Point 310 and the LTE eNBs 320, 322. Figure 8 illustrates one possible way of connecting a Wi-Fi access network to the same core network as the 3GPP-specified access network. It should be noted that the presently disclosed techniques are not restricted to scenarios where the Wi-Fi access network is connected in this way.

There may be an **interface 370** between the Wi-Fi and 3GPP domains, whereby the two networks may exchange information that may be used to facilitate on steering traffic over the right network. One example of such information exchanged via the interface 370 is load conditions in the two networks. The two networks may also exchange information with regard to the context of the UE 300 such as the terminal 120, so that each may be aware of whether the UE 300 is being served by the other network, as well as some details of the connection over the other network, e.g. traffic volume, throughput, etc...

It should be noted that Access-point Controller (AC) functionality exists in the Wi-Fi domain that controls the Wi-Fi AP. This functionality, though not depicted in the figure for the sake of clarity, may be physically located in the Wi-Fi wireless access point 310, the P-GW 340 or another separate physical entity.

When using the word "comprise" or "comprising" it shall be interpreted as non-limiting, i.e. meaning "consist at least of".

The embodiments herein are not limited to the above described preferred embodiments. Various alternatives and modifications may be used.

Referring to Figure 9 and Figure 7.

According to a first aspect of embodiments herein, the object is achieved by a method performed by a terminal 120 for inter RAT access selection, the terminal 120 being capable to operate in one or more Radio Access Technologies, RATs,.

In some embodiments, the terminal 120 **determines 901** whether the terminal 120 is configured with RAN assistance parameters relating to inter RAT access selection.

In some embodiments a timer such as e.g. a T350 timer mentioned herein is used. At a timer expiry/stop the "determining" may be triggered.

Thus in some embodiments the determining whether the terminal 120 is configured with RAN assistance parameters relating to inter RAT access selection is done at a configured time after the connection with the first RAT had been released.

The determining may be performed depending on the current selected cell in the first RAT. For Example: only performed if the terminal 120 has currently not selected the same cell of the first RAT in which the RAN assistance parameters had been acquired.

This may be performed by the terminal 120, e.g. by means of a **determining module 710** in the terminal 120, configured to do this action.

Based on the determining, the terminal 120 will in some embodiments **act 902** for inter RAT access selection according to any one out of:
- when the terminal is not configured with RAN assistance parameters, acting according to a first rule for inter RAT selection mechanism, else
- when the terminal 120 is configured with RAN assistance parameters, acting according to a second rule for inter RAT selection mechanism.

In some embodiments, the first and second rules are different.

In some embodiments, the first rule is a rule to steer to a default RAT

In some embodiments, the default RAT is E-UTRAN or LTE

This may be performed by the terminal 120, e.g. by means of an **acting module 720** in the terminal 120, configured to do this action.

In some embodiments, the terminal 120 **determines 903** whether or not the terminal 120 has valid dedicated RAN assistance parameters.

This may be performed by the terminal 120, e.g. by means of the **determining module 710** in the terminal 120, configured to do this action.

When the terminal 120 has no valid dedicated RAN assistance parameters, in some embodiments, the terminal 120 **acquires 904** broadcast RAN assistance parameters, e.g. from a network node.

In some embodiments, the acquiring of broadcast RAN assistance parameters is conditional on one or more criteria.

In some embodiments, one criterion is that a network node has configured the terminal to do so.

This may be performed by the terminal 120, e.g. by means of an **acquiring module 780** in the terminal 120, configured to do this action.

### Abbreviations

Explain all abbreviations and acronyms used in the document.
- 3GPP: 3rd Generation Partnership Project
- LTE: Long Term Evolution
- UMTS: Universal Mobile Terrestrial System
- WLAN: Wireless Local Area Network
- RRC: Radio Resource Control
- UE: User Equipment
- RAN: Radio Access Network
- RSRP: Reference Signal Received Power
- RSSI: Received Signal Strength Indication

## Claims

1. A method performed by a terminal (120) for inter Radio Access Technology, RAT, access selection, the terminal (120) being capable to operate in one or more RATs, the method comprising:
*determining* (901 601) whether or not the terminal (120) is configured with Radio Access Network, RAN, assistance parameters relating to inter RAT access selection;
when it is determined that the terminal (120) is not configured with RAN assistance parameters, *acting* (902 602) according to a first rule for inter RAT access selection, **characterized in that** the *acting* (902 602) comprises *refraining* (604) from any one or more out of: obtaining, acquiring, and applying broadcasted RAN assistance parameters, and wherein the acting further comprises *determining* (603) whether or not to *refrain* (604) from any one or more out of: obtaining, acquiring, and applying broadcasted RAN assistance parameters, based on one or more conditions, wherein the on one or more conditions comprises: a release of the terminal (120), network configuration, capabilities of the terminal (120), a cell which the terminal (120) is associated with, and wherein the acting further comprises *steering* (606) traffic to a default RAT network.

2. The method according to claim 1, further comprising:
*receiving* (605) an indication from a network node (111, 112), which indication indicates which RAT the terminal (120) shall steer traffic to when acting according to the first rule.

3. The method according to claim 2, wherein the received indication is a Radio Resource Control, RRC indication.

4. A terminal (120) for inter Radio Access Technology, RAT, access selection, the terminal (120) being capable to operate in one or more RATs, the terminal (120) being configured to:
*determine* whether or not the terminal (120) is configured with Radio Access Network, RAN, assistance parameters relating to inter RAT access selection; and when it is determined that the terminal (120) is not configured with RAN assistance parameters, *act* according to a first rule for inter RAT access selection, **characterized in that** the terminal (120) further is configured to act according to a first rule for inter RAT access by *refrain* from any one or more out of: obtaining, acquiring, and applying broadcasted RAN assistance parameters, and wherein the terminal (120) further is configured to act according to a first rule for inter RAT access by *determining* whether or not to *refrain* from any one or more out of: obtaining, acquiring, and applying broadcasted RAN assistance parameters, based on one or more conditions, wherein the on one or more conditions is adapted to comprise: a release of the terminal (120), network configuration, capabilities of the terminal (120), a cell which the terminal (120) is associated with, and wherein the terminal (120) further is configured to act according to a first rule for inter RAT access by steering traffic to a default RAT network.

5. The terminal (120) according to claim 4, wherein the terminal (120) further is configured to:
*receive* an indication from a network node (111, 112), which indication indicates which RAT the terminal (120) shall steer traffic to when acting according to the first rule.

## Patentansprüche

1. Verfahren, durchgeführt durch ein Endgerät (12) für Inter-Funkzugangstechnologie- bzw. -RAT-Zugangsauswahl, wobei das Endgerät (120) imstande ist, in einem oder mehreren RATs zu funktionieren, das Verfahren umfassend:
*Bestimmen* (901, 601), ob das Endgerät (120) mit Funkzugangsnetzwerk- bzw. RAN-Unterstützungsparametern hinsichtlich von Inter-RAT-Zugangsauswahl konfiguriert ist oder nicht;
wenn bestimmt wird, dass das Endgerät (120) nicht mit RAN-Unterstützungsparametern konfiguriert ist, *Agieren* (902, 602) gemäß einer ersten Regel für Inter-RAT-Zugangsauswahl, **dadurch gekennzeichnet, dass** das *Agieren* (902, 602) umfasst, von einem oder mehreren von Folgendem *abzusehen* (604): Erlangen, Erfassen und Anwenden von rundgesendeten RAN-Unterstützungsparametern, und wobei das Agieren ferner umfasst, zu *bestimmen* (603), von einem oder mehreren von Folgendem *abzusehen* (604) oder nicht: Erlangen, Erfassen und Anwenden von rundgesendeten RAN-Unterstützungsparametern, basierend auf einer oder mehreren Bedingungen, wobei die eine oder mehreren Bedingungen umfassen: eine Freisetzung des Endgeräts (120), eine Netzwerkkonfiguration, Fähigkeiten des Endgeräts (120), eine Zelle, mit der das Endgerät (120) assoziiert ist, und wobei das Agieren ferner umfasst, Verkehr zu einem Standard-RAT-Netzwerk zu *lenken* (606).

2. Verfahren nach Anspruch 1, ferner umfassend:
*Empfangen* (605) einer Angabe von einem Netzwerkknoten (111, 112), wobei die Angabe angibt, zu welcher RAT das Endgerät (120) Verkehr lenken soll, wenn es gemäß der ersten Regel agiert.

3. Verfahren nach Anspruch 2, wobei die empfangene Angabe eine Funkbetriebsmittelsteuerung- bzw. RRC-Angabe ist.

4. Endgerät (120) für Inter-Funkzugangstechnologie- bzw. -RAT-Zugangsauswahl, wobei das Endgerät (120) imstande ist, in einer oder mehreren RATs zu funktionieren, wobei das Endgerät (120) konfiguriert ist zum:
*Bestimmen,* ob das Endgerät (120) mit Funkzugangsnetzwerk- bzw. RAN-Unterstützungsparametern hinsichtlich von Inter-RAT-Zugangsauswahl konfiguriert ist oder nicht; und wenn bestimmt wird, dass das Endgerät (120) nicht mit RAN-Unterstützungsparametern konfiguriert ist, *Agieren* gemäß einer ersten Regel für Inter-RAT-Zugangsauswahl, **dadurch gekennzeichnet, dass** das Endgerät (120) ferner konfiguriert ist zum Agieren gemäß einer ersten Regel für Inter-RAT-Zugang durch *Absehen* von einem oder mehreren von Folgendem: Erlangen, Erfassen und Anwenden von rundgesendeten RAN-Unterstützungsparametern, und wobei das Endgerät (120) ferner konfiguriert ist, gemäß einer ersten Regel für Inter-RAT-Zugang zu agieren, durch *Bestimmen,* von einem oder mehreren von Folgendem *abzusehen* oder nicht: Erlangen, Erfassen und Anwenden von rundgesendeten RAN-Unterstützungsparametern, basierend auf einer oder mehreren Bedingungen, wobei die eine oder mehreren Bedingungen angepasst sind zum Umfassen: einer Freisetzung des Endgeräts (120), einer Netzwerkkonfiguration, Fähigkeiten des Endgeräts (120), einer Zelle, mit der das Endgerät (120) assoziiert ist, und wobei das Endgerät (120) ferner konfiguriert ist zum Agieren gemäß einer ersten Regel für Inter-RAT-Zugang durch Lenken von Verkehr zu einem Standard-RAT-Netzwerk.

5. Endgerät (120) nach Anspruch 4, wobei das Endgerät (120) ferner konfiguriert ist zum:
*Empfangen* einer Angabe von einem Netzwerkknoten (111, 112), wobei die Angabe angibt, zu welcher RAT das Endgerät (120) Verkehr lenken soll, wenn es gemäß der ersten Regel agiert.

## Revendications

1. Procédé réalisé par un terminal (120) pour une sélection d'accès inter-technologies d'accès radio, RAT, le terminal (120) disposant de la capacité de fonctionner selon une ou plusieurs RAT, le procédé comprenant :
la *détermination* (901, 601) de si oui ou non le terminal (120) est configuré à l'aide de paramètres d'assistance de réseau d'accès radio, RAN, qui sont rapportés à une sélection d'accès inter-RAT ;
lorsqu'il est déterminé que le terminal (120) n'est pas configuré à l'aide de paramètres d'assistance de RAN, *l'intervention* (902, 602) conformément à une première règle pour une sélection d'accès inter-RAT, **caractérisé en ce que** *l'intervention* (902, 602) comprend le fait de *s'abstenir* (604) de l'une quelconque ou de plusieurs quelconques des actions qui suivent : l'obtention, l'acquisition et l'application de paramètres d'assistance de RAN diffusés, et dans lequel l'intervention comprend en outre la *détermination* (603) de si oui ou non il convient de *s'abstenir* (604) de l'une quelconque ou de plusieurs quelconques des actions qui suivent : l'obtention, l'acquisition et l'application de paramètres d'assistance de RAN diffusés, sur la base d'une ou de plusieurs conditions, dans lequel les une ou plusieurs conditions comprennent : une libération du terminal (120), une configuration de réseau, des capacités du terminal (120), une cellule à laquelle le terminal (120) est associé, et dans lequel l'intervention comprend en outre le fait de *diriger* (606) le trafic sur un réseau de RAT par défaut.

2. Procédé selon la revendication 1, comprenant en outre :
la *réception* (605) d'une indication en provenance d'un noeud de réseau (111, 112), laquelle indication indique sur quelle RAT le terminal (120) devra diriger le trafic lorsqu'il interviendra conformément à la première règle.

3. Procédé selon la revendication 2, dans lequel l'indication reçue est une indication de commande de ressources radio, RRC.

4. Terminal (120) pour une sélection d'accès inter-technologies d'accès radio, RAT, le terminal (120) disposant de la capacité de fonctionner selon une ou plusieurs RAT, le terminal (120) étant configuré de manière à ce qu'il réalise les actions qui suivent :
la *détermination* de si oui ou non le terminal (120) est configuré à l'aide de paramètres d'assistance de réseau d'accès radio, RAN, qui sont rapportés à une sélection d'accès inter-RAT ; et lorsqu'il est déterminé que le terminal (120) n'est pas configuré à l'aide de paramètres d'assistance de RAN, *l'intervention* conformément à une première règle pour une sélection d'accès inter-RAT, **caractérisé en ce que** le terminal (120) est en outre configuré de manière à ce qu'il intervienne conformément à une première règle pour un accès inter-RAT *en s'abstenant* de l'une quelconque ou de plusieurs quelconques des actions qui suivent : l'obtention, l'acquisition et l'application de paramètres d'assistance de RAN diffusés, et dans lequel le terminal (120) est en outre configuré de manière à ce qu'il intervienne conformément à une première règle pour un accès inter-RAT *en déterminant* si oui ou non il convient qu'il *s'abstienne* de l'une quelconque ou de plusieurs quelconques des actions qui suivent : l'obtention, l'acquisition et l'application de paramètres d'assistance de RAN diffusés, sur la base d'une ou de plusieurs conditions, dans lequel les une ou plusieurs conditions sont adaptées de manière à ce qu'elles comprennent : une libération du terminal (120), une configuration de réseau, des capacités du terminal (120), une cellule à laquelle le terminal (120) est associé, et dans lequel le terminal (120) est en outre configuré de manière à ce qu'il intervienne conformément à une première règle pour un accès inter-RAT en dirigeant le trafic sur un réseau RAT par défaut.

5. Terminal (120) selon la revendication 4, dans lequel le terminal (120) est en outre configuré de manière à ce qu'il réalise l'action qui suit :
la réception d'une indication en provenance d'un noeud de réseau (111, 112), laquelle indication indique sur quelle RAT le terminal (120) devra diriger le trafic lorsqu'il interviendra conformément à la première règle.
